# EUROPEAN PATENT APPLICATION

(11) **EP 3 890 299 A1**
(43) Date of publication of application: **06.10.2021**
(21) Application number: 20167885.1
(22) Date of filing: 03.04.2020
(51) Int. Cl.: H04N 5/225, G01B 11/25, F21V 8/00

(54) **CAMERA UNIT HAVING A LIGHT GUIDE PLATE**

(71) Applicant: Vestel Elektronik Sanayi ve Ticaret A.S., 45030 Manisa (TR)
(72) Inventor: KIRISKEN, Barbaros, 45030 Manisa (TR)
(74) Representative: Kehl, Ascherl, Liebhoff & Ettmayr Patentanwälte Partnerschaft mbB

(57) **Abstract**

The present invention refers to a camera unit (1). The camera unit according to the present invention comprises at least:
An optical sensor device (2) for capturing image data,
a lens device (4) for guiding light to the optical sensor device (2),
wherein the lens device (4) is arranged in front of the optical sensor device (2),
characterized in that
a light guide plate (6) is provided
wherein the light guide plate (6) comprises multiple light emitting sections (8) for emitting light,
wherein the light guide plate (6) is oriented in such a manner that light emitted by means of the light emitting sections (8) passes through at least one lens (10) of the lens device (4).

## Description

The present invention refers to a camera unit respectively camera device according to claim 1, a multimedia device according to claim 11, according to claim 12 to a method for operating a camera unit, according to claim 14 to a method for producing a camera unit and according to claim 15 to a computer program product.

### Background of the invention

US2018343403A1 discloses a video camera assembly, wherein the video camera assembly includes: one or more processors configured to operate the video camera assembly in a day mode and in a night mode; an image sensor having a field of view of a scene and configured to capture video of a first portion of the scene while in the day mode of operation and in the night mode of operation, the first portion corresponding to the field of view of the image sensor; one or more infrared (IR) illuminators configured to provide illumination during the night mode of operation while the image sensor captures video; and an IR reflector component configured to: substantially restrict the illumination onto the first portion of the scene, and illuminate the first portion in a substantially uniform manner across the field of view of the image sensor.

US4657393A discloses that a pattern of light is projected upon a surface to be measured which may be devoid of surface detail. A sharply focused image of the surface provides distance discrimination. Although the projected pattern a separate from the imaging optics, a common optics path removes distortion, provides maximum sensitivity and eliminates processing for misalignment between projector and imager. Sequential cross-correlation, synchronous detection or percent modulation processing methods may be readily implemented to develop three-dimensional coordinates relative to the sensor for all in-focus regions of the image. Refocusing the lens provides depth coverage. The amount of data can be increased by adapting the projected pattern to produce a maximum of detail in the direction of minimum rate of change of depth of the surface being measured.

US10066933B2 discloses systems for depth mapping. A method of depth mapping is performed at an apparatus including a projector, a camera, one or more processors, and memory storing one or more programs for execution by the one or more processors. The method includes identifying one or more areas of interest in a scene in accordance with variation of depth in the scene as detected at a first resolution. The method also includes, for each area of interest: applying, via the projector, a respective structured-light pattern to the area of interest; capturing, via the camera, an image of the area of interest with the respective structured-light pattern applied to it; and creating a respective depth map of the area of interest using the captured image, the respective depth map having a higher resolution than the first resolution

US20180270474A1 discloses an optical imaging system utilizes a three-dimensional (3D) light scanner to capture topography information, color reflectance information, and fluorescence information of a target object being imaged, such as a surgical patient. The system also utilizes the topography information of the target object to perform an image mapping process to project the captured fluorescence or other intraoperative images back onto the target object with enhanced definition or sharpness. Additionally, the system utilizes the topography information of the target object to co-register two or more images, such as a color image of the target object with a fluorescence image for presentation on a display or for projection back onto the target object.

WO2012057088A1 discloses a manufacturing method for a light-guide plate. According to WO2012057088A1 a first surface from which light is emitted and a dot pattern are divided by the same mesh, and diffusion dots are formed on a second surface by the designed dot pattern to create a light-guide plate.

Prior art systems especially have separated camera and projector assemblies. Those systems require an additional camera and decreasing detection performance because of separation between camera and projector.

### Object of the invention

Thus, it is the object of the present invention to provide an advanced solution that enables better performance and/or lower costs.

### Description of the invention

The before mentioned object is solved by a camera unit according to claim 1. Said camera unit preferably comprises at least an optical sensor device for capturing image data. The camera unit preferably also comprises a lens device for guiding light to the optical sensor device, wherein the lens device is arranged in front of the optical sensor device. The lens device preferably comprises one or more than one, in particularly multiple or two or more than two or up to 20 or up to 10 or up to 5 lens elements. According to the invention a light guide plate is provided, wherein the light guide plate comprises multiple light emitting sections for emitting light, wherein the light guide plate is oriented in such a manner that light emitted by means of the light emitting sections passes through at least one lens of the lens device. The light guide plate can be a light guide plate e.g. produced according to the method described in WO2012057088A1.

This solution is beneficial since all necessary components are arranges in one device. Thus, production costs can be reduced to less and/or smaller parts and overall performance can be increased since all images and/or frames can be captured by means of one optical sensor device (and therefore the main optical sensor).

Thus, the present invention preferably has a light guide and IR light inside a camera assembly. The light guide is preferably arranged the between lenses and camera sensor. Light guide has dots which is seen under IR and power IR light for projection. Normally the camera makes its function by taking the photo and/or video. When it is converted to 3D sensor mode for depth detection, electronic shutter turned off the camera sensor and IR light powered on, then the sensor is turned on sequentially. At that time camera saw very near structured dots and larger and separated dots further away. When the system compares two, the difference vector is taken and larger and separated dots and dots directly in front of the camera are separated.

Thus, the camera respectively optical sensor and projector are preferably combined, and the camera can be used its native function. Additionally, the original dot-matrix respectively the light guide plate) is near to the optical sensor and projected dots are on same picture and system respectively an analyser unit separating them by differentiating on the same picture. Preferably non-visible dots are used on the visible spectrum. Thus, highly preferably a combined structure of camera and light guide plate is provided.

Further preferred embodiments are subject matter of the dependent claims and of the following specification parts.

The light guide plate comprises according to a further preferred embodiment of the present invention more than three, in particularly more than 10 or more than 20 or more than 50 or more than 100, light emitting sections. It is possible that some of the light emitting sections have the same shape and/or size (mm²) or a majority of light emitting sections has the same shape and/or size (mm²) or all of the light emitting sections have the same shape and/or size (mm²). Thus, it is also possible that some of the light emitting sections have a first shape and/or first size (mm²) and some of the light emitting sections have a second shape and/or second size (mm²). Additionally, it is possible that some of the light emitting sections have a third shape and/or a third size (mm²). A preferred shape is hereby a circular shape. However further or alternative shapes are e.g. a rectangular shape or a polygonal shape or a triangular shape. Further shapes are also possible.

The light guide plate comprises according to a further preferred embodiment of the present invention at least one light source and/or at least one port for receiving light emitted by a light source, wherein the light guide plate distributes the light of the light source to all light emitting sections. In case the light guide plate receives light via the port, in particularly the light port, the light source can be arranged as separate light source, that means that the light source is e.g. physically not directly coupled to the light guide plate or materialized as part of the light guide plate. The separate light source is preferably physically coupled via a light guide element to the light guide plate. However, it is possible that the separate light source is functionally directly coupled with the light guide plate, that means that light emitted by the light source preferably directly enter the light guide plate.

Each light emitting section receives according to a further preferred embodiment of the present invention a predefined amount of light of the at least one light source. Preferably each light emitting section receives the same amount of light or an amount of light that differs up to 80% or up to 50% or up to 30% from the amount of light which is the highest amount emitted to one of the light emitting sections. This embodiment is beneficial since a predefined pattern can be generated by the light emitted through the light emitting sections respectively by the light emitted through the light emitting sections and projected onto one or multiple object. Light emitted through each light emitting section forms a marking projected in the one or multiple object/s. At least one property of one or multiple or all markings or of the light emitted through the respective light emitting section is provided to an analyzer unit and/or stored as property data in a data storage means.

At least two light emitting sections and preferably the majority of light emitting sections and highly preferably all light emitting sections form according to a further preferred embodiment of the present invention an opening in a housing, in particularly in one preferably plane wall, of the light guide plate, or in a wall member or sheet member or mask member attached to the housing.

Each of the openings has according to a further preferred embodiment of the present invention a predefined shape, wherein all openings have the same shape. Each of the openings has according to a further preferred embodiment of the present invention a predefined shape, wherein at least a first group of openings has a first shape and wherein a second group of openings has a second shape, wherein the first shape differs from the second shape by the contour and/or opening size (respective size of area delimited by contour of opening)

The light guide plate is according to a further preferred embodiment of the present invention arranged between the optical sensor device and the lens device, in particularly closer to a surface of a lens (closest lens) of the lens device compared to a surface of an optical sensor of the optical sensor device. Alternatively, the light guide plate can be arranged closer to optical sensor compared to a lens (closest lens) of the lens device. Alternatively, the light guide plate can be arranged between the optical sensor and a lens (closest lens) of the lens device.

The light source is according to a further preferred embodiment of the present invention an IR light source. The IR light source preferably emits light in the IR-B range, which is preferably in the range of 1,4-3 µm. Additionally, or alternatively the IR light source emits light in the IR-C range which is preferably in the range of 3-1000 µm. The IR-C range can be divided into a MIR range and a FIR, wherein the MIR range is preferably a range of 3-50 µm and wherein the FIR range is preferably a range of 50-1000 µm.

According to a further preferred embodiment of the present invention a control device respectively an analyzer unit for controlling the light source device and the optical sensor device is provided. The control device respectively the analyzer unit operates the optical sensor device in dependency of an operation of the light source device. The analyzer unit preferably accesses data, in particularly property data, stored in a data storage.

The above-mentioned object is also solved by a multimedia device, in particularly smartphone, tablet PC or smartwatch, according to claim 11. The multimedia device according to the present invention preferably comprises at least a camera unit according to any of the preceding claims and at least one display device for displaying images captured by means of the camera unit, wherein the camera unit and the display device are arranged in the same housing. This solution is beneficial since multimedia devices like smartphones, tablet PCs or smartwatches are used by a high number of people. Due to the present invention said devices are able to gather depth information respectively depth data with respect to the analyzed object. Said depth data can be stored together with the further data captured by the optical sensor in a data storage means.

The above-mentioned object is also solved by a method for operating a camera unit according to claims 1 to 10, in particularly a multimedia device, according to claim 11. The method according to the present invention preferably comprises at least the steps: Emitting light by means of a light source, wherein the light is emitted into a first direction, deflecting the light by means of a light guide plate, wherein the light guide plate comprises multiple openings for emitting said deflected light, wherein the deflected light is emitted into a direction of a lens device, capturing light by means of an optical sensor device, wherein the captured light comprises reflected light, wherein said reflected light is a fraction of the light emitted through the multiple openings, wherein the light source, the light guide plate, the lens device and the optical sensor device are arranged inside the same housing.

This solution is beneficial since depth information can be gathered by operating a camera unit or a multimedia device according to the present invention.

The emitted light is according to a further preferred embodiment of the present invention light in the visible spectrum and wherein the light source and the optical sensor device are operated in a predefined sequences, wherein the optical sensor device captures with respect to one photo or one video one or multiple images and/or one or multiple frames in a row, wherein a first set of images and/or frames is captured while the light source is operated and wherein a second set of images and/or frames is captured while the light source is not operated. It is possible that the first set comprises one photo or consists of one photo or the first set comprises one frame or consist of one frame and/or the second set comprises one photo or consist of one photo or the second set comprises one frame or consists of one frame. An analyzer unit preferably processes the first set of images and/or frames and the second set of images and/or frames differently, wherein the analyzer unit generates one file representing the photo or video and preferably also depth data representing depth information of the object. This embodiment is beneficial since the generated file can be forwarded to further recipients and/or analyzed and/or utilized in further processes.

In one possible feature timing is done by taking series photos, so the first instance system takes a photo by not projecting the light and takes the second photo with light projected, under millisecond level. Another possible feature is taking video and sequentially turn on/off the projection.

The emitted light is according to a further preferred embodiment of the present invention light in the invisible spectrum and wherein the light source and the optical sensor device are operated in a predefined sequences, wherein the optical sensor device captures with respect to one photo or one video multiple images and/or frames in a row, wherein an analyzer unit analyzes a light pattern caused by the emitted light and reflected by the object, wherein the analyzer unit assigns depth data to multiple image and/or frame sections in dependency of the analyzed light pattern. Preferably the amount of light passing through each single light emitting section is registered by an analyzer unit. Additionally, or alternatively the position and/or size and/or shape of multiple light emitting sections and/or of each single light emitting section is registered by the analyzer unit. Additionally, or alternatively data representing the amount of light passing through each single light emitting section and/or the position and/or size and/or shape of multiple light emitting sections and/or of each single light emitting section is stored in a data storage means. The analyzer unit preferably has access to the data storage means for accessing said data.

According to a further preferred embodiment of the present invention difference vectors are created with markings projected onto the object and by means of light emitted through the openings of the light guide plate, wherein the markings are captured and processed, in particularly compared to each other and/or compared with comparison data or compared with a look-up table, to determine a depth information respectively depth data. This embodiment is beneficial since depth information about the present scene or object can be determined by means of an optical 2D sensor, in particularly a CCD-chip or CMOS-chip.

The above-mentioned object is also solved by a method for producing a camera unit according to claims 1 to 10. The method for producing a camera unit preferably comprises at least the steps: Providing a lens device; Providing an optical sensor device; Providing an IR light source; Providing a light guide plate; Arranging the light guide plate in such a manner, that light emitted through multiple openings of the light guide plate directly passes at least one lens element of the lens device; Arranging the camera unit on the same side of the lens device on which the light guide plate is arranged. This solution is beneficial since the produced camera device can be small and it is possible to capture image data in high quality.

The above-mentioned object is also solved by a computer program product comprising instructions that cause the device according to the present invention, in particularly according to claim 11, to perform the method steps of the present invention, in particularly according to claim 12.

Further benefits, goals and features of the present invention will be described by the following specification of the attached figures, in which components of the invention are exemplarily illustrated. Components of the devices and methods according to the inventions, which match at least essentially with respect to their function, can be marked with the same reference sign, wherein such components do not have to be marked or described in all figures.

The invention is just exemplarily described with respect to the attached figure in the following.

### Brief Description of the Drawings

- Fig. 1a: shows schematically a side view of a camera device according to the present invention,
- Fig. 1b: shows schematically an object, wherein markings are projected onto the object,
- Fig. 2: a multimedia device according to the present invention, and
- Fig. 3a: steps of a method for operating a camera device according to the present invention,
- Fig. 3b: steps of a production method for producing a camera device according to the present invention.

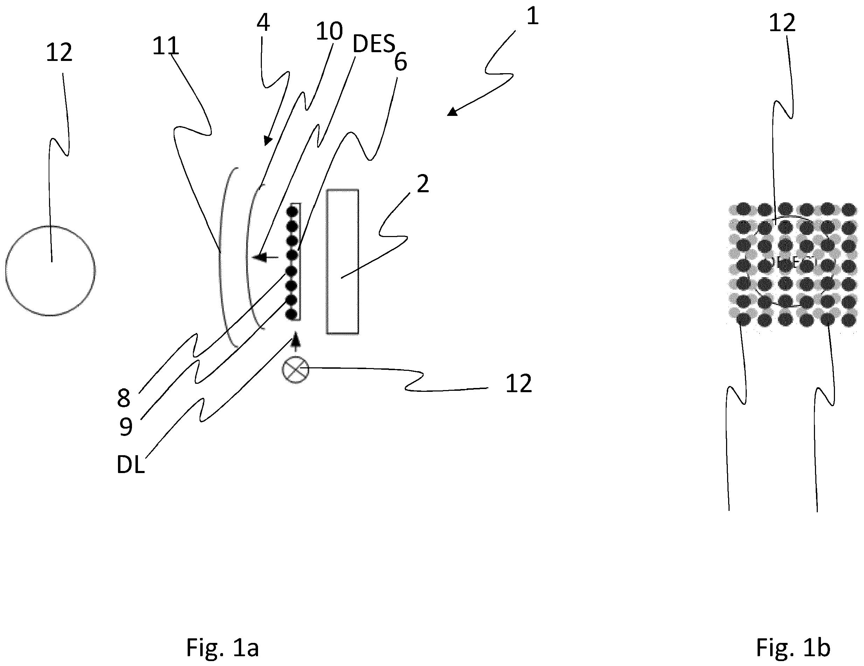

Fig. 1a shows a camera unit 1 respectively a camera assembly, where the camera device has structured light dots on a lens assembly respectively lens device and applying light, in particularly IR light, to an object 14. In other words, Fig. 1a shows a camera assembly with a light guide and special dots under IR.

An optical sensor 3, in particularly a CCD-chip or CMOS-chip, captures image data of a scene respectively an object 14. The image data (cf. fig. 1b) at least partially represents markings, in particularly dots, projected on the scene and/or object 14. Thus, difference vectors are created with structured lights. The structured light respectively the markings are captured and processed, in particularly compared to each other and/or compared with comparison data or compared with a look-up table, to determine a depth information respectively depth data. The present solution is specific for 3D depth sensors and can be used in any place that depth sensor needed, especially multimedia devices, like mobile phones.

Thus, the camera unit 1 preferably comprises an optical sensor device 2 for capturing image data. As mentioned above the optical sensor can be a 2D sensor. The camera unit 1 preferably also comprises a lens device 4 for guiding light to the optical sensor device 2. The lens device preferably comprises one or more than one lens 10, in particularly two or more than two lenses 10, 11. Preferably up to 5 or 10 or 15 lenses. The lens device 3 preferably comprises at least or exactly one convex lens or one bi-convex lens or one planar-convex lens. Additionally, or alternatively the lens device 4 comprises at least or exactly one concave lens or one bi-concave or one planar-concave lens. The lens device 4 is preferably arranged in front of the optical sensor device 2.

A light guide means, in particularly a light guide plate 6, is provided, in particularly in the optical path between the optical sensor 3 and the lens device 4. Additionally, or alternatively the light guide means, in particularly light guide plate 6 partially or fully surrounds the optical sensor 3 or the light path from the lens device 4 to the optical sensor 3.

The light guide means, in particularly the light guide plate, 6 comprises multiple light emitting sections 8 for emitting light, in particularly for projecting markings, in particularly dots, onto a scene or object (cf. fig. 1b). The light guide plate 6 is oriented in such a manner that light emitted by means of the light emitting sections 8 passes through at least one lens 10 of the lens device 4.

Alternative it is also possible that the light guide means, in particularly light guide plate 6, is arranged on one side of the lens device and the optical sensor 3 is arranged on another side respectively opposing side (in the light path) of the lens device 4.

Reference DL indicates a light path of light generated by a light source 12 and entering the light guide plate 6 in a direction aligned to direction DES of a light path of light emitted through the lens device 4.

The emitting sections 8, 9 can be described as dots, in particularly light dots through which light, in particularly IR-light, can be emitted. The emitting sections 8, 9 are arranged in a large number, in particularly 3 x 3 matrix or 5 x 5 matrix or 10 x 10 matrix or 50 x 50 matrix or 100 x 100 matrix or X x X matrix or X x Y matrix, wherein X is preferably more than 5 or equal to 5 and/or wherein Y is preferably more than 5 or equal to 5. The individual emitting section 8, 9 are preferably spaced apart from the next emitting section 8, 9 more than 2µm or more than 5 µm or more than 10 µm or more than 20 µm or more than 50 µm or more than 100 µm, in particularly up to 200 µm or 500 µm or 1000 µm or 2000 µm. Preferably all emitting sections 8, 9 are having the same size and/or shape and/or distance to the next emitting section 8, 9. However, it is also possible that some emitting sections 8, 9 have a larger distance to the next respectively closest emitting section 8, 9 compared to other emitting sections. It is alternatively or additionally possible that some emitting sections have a first shape and/or shape and some emitting sections have a second form and/or shape and some emitting sections have a third form and/or shape. Thus, the dots on light guide plate 6 are preferably very small and very near. The light guide plate 6 is preferably arranged very close to the camera respectively optical sensor device 2, so that it is out of focus of the optical sensor device 2 respectively camera. The light projected via said emitting sections 8, 9 can be eliminated from captured image data, in particularly by using preferably real-time image editing algorithms. It is possible to recover original photo respectively original image data from the taken photo respectively generated image data with dots, very similar with "fence removal" algorithms.

This camera unit 1 can be used, in particularly together with an additional camera, very likely in all recent devices, in particularly mobile phones or tablet PCs or smart watches, so that the image data captured and/or generated by of one camera, in particularly of the camera unit 1 of the present invention, is used to recover image data captured and/or generated by a further camera of said device.

Thus, it is possible that the optical sensor 2 of the camera unit 1 captures one photo or a series of photos and/or generates image data representing said photo or the series of photos. After a first defined number of photos, in particularly after the first photo or after a plurality of photos, in particularly a second photo, a second defined number of photos can be taken, wherein the second defined number of photos comprises one photo or exactly one photo or multiple photos, in particularly more than two or exactly two photos. The first defined number of photos or the second defined number of photos is preferably captured while light is emitted through light emitting plate 6 and therefore by optical sensor 2. The other defined number of photos is preferably captured while no light, in particularly no IR-light, is emitted through the light guide plate 6. Said number of photos is preferably also captured by the optical sensor 2 or by another optical sensor respectively another camera. Said other optical sensor respectively other camera is preferably also part of the device, in particularly of the mobile phone or tablet PC or smart watch. In case multiple the optical sensors 2 captures and/or generates image data and in case another camera respectively optical sensor captures and/or generates image data, the image data generated by said optical sensors is processed by one processor unit.

Light guide plate 6 is preferably a transparent (in particularly visible light) object, which is preferably manufactured of a polymer material, in particularly plastic or Plexiglas, or glass or similar hardened glass/plastics. Wherein the light guide plate 6 preferably has a very high optical permeability. Alternatively, the light guide plate can be a thin light guide film (LGF), in particularly a light guide film thinner than 2mm, or thinner than 1mm or thinner than 0,8mm or thinner than 0,5mm or thinner than 0,1mm.

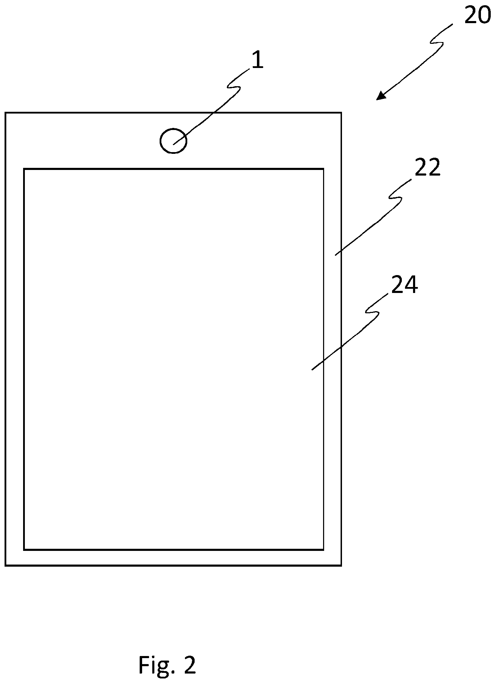

Fig. 2 shows a multimedia device 20, in particularly a smartphone or Tablet PC or smartwatch. The multimedia device 20 preferably comprises a housing 22 and a display 24. The multimedia device preferably comprises a communication unit for communicating via the internet.

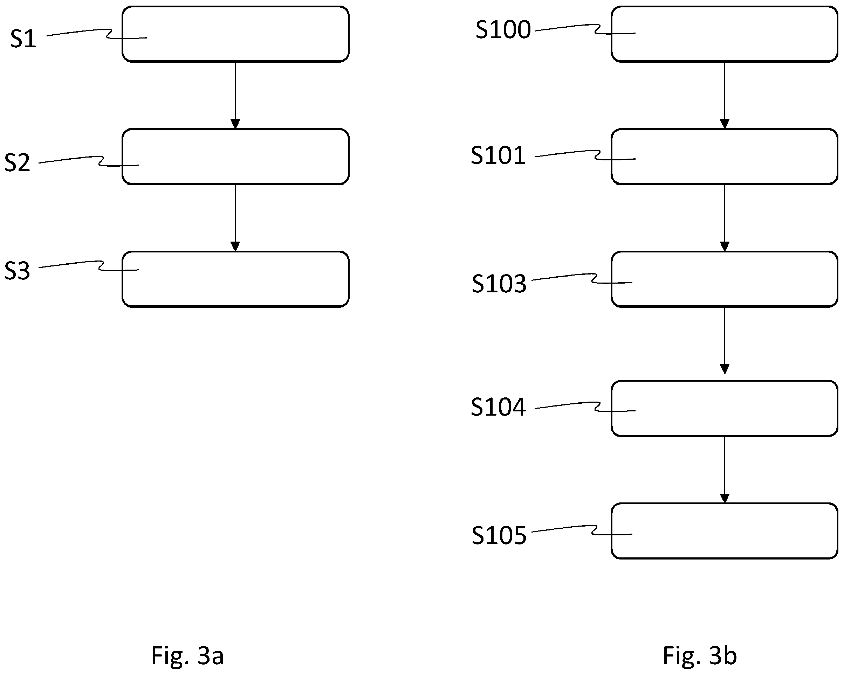

Fig. 3a shows steps of a method for operating a camera unit 1 according to the present invention. The method preferably comprises the steps:
S1: emitting light by means of a light source 12. The light is preferably emitted into a first direction DL.
S2: deflecting the light by means of a light guide plate 6. The light guide plate 6 preferably comprises multiple openings for emitting said deflected light, wherein the deflected light is preferably emitted into a direction (DES) of a lens device 4.
S3: capturing light by means of an optical sensor device 2. The captured light preferably comprises reflected light, wherein said reflected light is preferably a fraction of the light emitted through the multiple openings. The light source 12, the light guide plate 6, the lens device 4 and the optical sensor device 3 are preferably arranged inside the same housing 22.

Fig. 3b shows steps for producing a camera unit 1 according to the present invention. The method comprises at least the steps:
S100: Providing a lens device 4.
S101: Providing an optical sensor device 2.
S102: Providing an IR light source 12.
S103: Providing a light guide plate 6.
S104: Arranging the light guide plate 6 in such a manner, that light emitted through multiple openings of the light guide plate 6 directly passes at least one lens element of the lens device 4.
S105: Arranging the camera unit 1 on the same side of the lens device (4) on which the light guide plate 6 is arranged.

Alternatively to steps S104 and S105 the light guide means, in particularly light guide plate 6, can be arranged on one side of the lens device 4, in particularly surrounding the lens device 4 or light entering the lens device 4, and the optical sensor 3 can be arranged on another side of the lens device 4, in particularly in a light path of light entering the camera behind the lens device 4. Thus, the light guide means, in particularly light guide plate 6, can be arranged in the light path of light entering the camera unit 1 before the lens device.

### List of reference numbers

- 1: camera unit
- 2: optical sensor device
- 3: optical sensor
- 4: lens device
- 6: light guide plate
- 8: light emitting section
- 9: further light emitting section
- 10: lens of lens device
- 11: further lens of lens device
- 12: light source
- 14: object
- 20: multimedia device
- 22: frame or housing
- 24: display

- DL: Direction of light emitted by light source
- DES: Direction of light emitted through light emitting section of light guide plate

## Claims

1. Camera unit (1)
at least comprising
an optical sensor device (2) for capturing image data,
a lens device (4) for guiding light to the optical sensor device (2),
wherein the lens device (4) is arranged in front of the optical sensor device (2),
**characterized in that**
a light guide plate (6) is provided
wherein the light guide plate (6) comprises multiple light emitting sections (8) for emitting light, wherein the light guide plate (6) is oriented in such a manner that light emitted by means of the light emitting sections (8) passes through at least one lens (10) of the lens device (4).

2. Camera unit according to claim 1,
**characterized in that**
the light guide plate (6) comprises more than three, in particularly more than 10 or more than 20 or more than 50 or more than 100, light emitting sections.

3. Camera unit according to claim 2,
**characterized in that**
the light guide plate (6) comprises at least one light source (12), in particularly an IR light source, and/or at least one port (14) for receiving light emitted by a light source (12), in particularly an IR light source, wherein the light guide plate (6) distributes the light of the light source (12) to all light emitting sections (8, 9).

4. Camera unit according to claim 3,
**characterized in that**
each light emitting section (8, 9) receives a predefined amount of light of the at least one light source (12).

5. Camera unit according to claim 4,
**characterized in that**
at least two light emitting sections (8, 9) and preferably the majority of the light emitting sections and highly preferably all light emitting sections form an opening in a housing, in particularly in one preferably plane wall, of the light guide plate (6).

6. Camera unit according to claims 2 to 5,
**characterized in that**
each of the openings has a predefined shape, wherein all openings have the same shape.

7. Camera unit according to claims 2 to 5,
**characterized in that**
each of the openings has a predefined shape,
wherein at least a first group of openings has a first shape and wherein a second group of openings has a second shape, wherein the first shape differs from the second shape by the contour and/or opening size.

8. Camera unit according to any of the preceding claims,
**characterized in that**
the light guide plate (6) is arranged between the optical sensor device (12) and the lens device (4), in particularly closer to a surface of a lens (10) of the lens device (4) compared to a surface of an optical sensor (3) of the optical sensor device (2).

9. Camera unit according to any of the preceding claims,
**characterized in that**
a control device for controlling the light source (12) and the optical sensor device (2) is provided, wherein the control device operates the optical sensor device (2) in dependency of an operation of the light source device (12).

10. Multimedia device (20), in particularly smartphone, tablet PC or smartwatch, at least comprising
a camera unit (1) according to any of the preceding claims and
at least one display device (24) for displaying images captured by means of the camera unit (20), wherein the camera unit (1) and the display device (24) are arranged in the same housing (22).

11. Method for operating a camera unit according to claims 1 to 10, at least comprising the steps:
emitting light by means of a light source (12), wherein the light is emitted into a first direction,
deflecting the light by means of a light guide plate (6), wherein the light guide plate (6) comprises multiple openings for emitting said deflected light, wherein the deflected light is emitted into a direction of a lens device (4),
capturing light by means of an optical sensor device (2), wherein the captured light comprises reflected light, wherein said reflected light is a fraction of the light emitted through the multiple openings,
wherein the light source (12), the light guide plate (6), the lens device (4) and the optical sensor device (3) are arranged inside the same housing (22).

12. Method according to claim 11,
**characterized in that**
the emitted light is light in the visible spectrum and wherein the light source (12) and the optical sensor device (2) are operated in a predefined sequences, wherein the optical sensor device (2) captures with respect to one photo or one video multiple images and/or frames in a row, wherein a first set of images and/or frames is captured while the light source (12) is operated and wherein a second set of images and/or frames is captured while the light source (12) is not operated, wherein an analyzer unit processes the first set of images and/or frames and the second set of images and/or frames differently, wherein the analyzer unit generates one file representing the photo or video
or
wherein the emitted light is light in the invisible spectrum and wherein the light source (12) and the optical sensor device (2) are operated in a predefined sequences, wherein the optical sensor device (2) captures with respect to one photo or one video multiple images and/or frames in a row, wherein an analyzer unit analyzes a light pattern caused by the emitted light and reflected by the object, wherein the analyzer unit assigns depth data to multiple image and/or frame sections in dependency of the analyzed light pattern.

13. Method according to claim 11 or 12,
**characterized in that**
difference vectors are created with markings projected onto the object and by means of light emitted through the openings of the light guide plate, wherein the markings are captured and processed, in particularly compared to each other and/or compared with comparison data or compared with a look-up table, to determine a depth information respectively depth data.

14. Method for producing a camera unit according to claims 1 to 10,
at least comprising the steps:
Providing a lens device (4),
Providing an optical sensor device (2),
Providing an IR light source (12),
Providing a light guide plate (6),
Arranging the light guide plate (6) in such a manner, that light emitted through multiple openings of the light guide plate (6) directly passes at least one lens element of the lens device (4),
Arranging the camera unit (1) on the same side of the lens device (4) on which the light guide plate (6) is arranged.

15. Computer program product comprising instructions that cause the device according to claim 11 to perform the method steps of claim 12.
